# EUROPEAN PATENT APPLICATION

(11) **EP 2 081 349 A1**
(43) Date of publication of application: **22.07.2009**
(21) Application number: 08000720.6
(22) Date of filing: 16.01.2008
(51) Int. Cl.: H04L 29/06

(54) **Method and system for transcoding avoidance in Border Gateways**

(71) Applicant: Nokia Siemens Networks Oy, 02610 Espoo (FI)
(72) Inventor: Goldstein, Peter, 8800 Thalwil (CH)
(74) Representative: Kley, Hansjörg

(57) **Abstract**

The architecture framework for Next Generation Network NGN, as defined by ITU-T and ETSI, includes border gateways (BGW) to connect different networks of different network providers or to connect access networks to the core network. Based on bilateral agreement a specific codec is used in the interconnecting network or a specific codec may be used in the core network independent of the codec used in the access network, respectively. In order to avoid unnecessary transcoding, an information element (12) is introduced which contains the result of an end-to-end negotiation on common codecs.
The information element (12) contains at least a field <<call/connection identifier>> (Call-Id) and a field <<common codec>> is introduced in the information exchange between a Physical Entity Call/Session Controller (PE-CSCF) and a Policy Decision Functional Entity (PD-FE).

## Description

This invention relates to a method and system for transcoding avoidance in Border Gateways according to the preamble of claim 1 respectively claim 6.

The architecture framework for Next Generation Network NGN, as defined by ITU-T and ETSI, describes beside others the functional entities of the gateway connecting different networks. The different networks could be either core networks of different network providers or access networks connected to a core network. The Service Stratum contains besides others the functional entity Call/Session Control, whereas the Transport Stratum contains in the Resource and Admission Control Area the Policy Decision Functional Entity PD-FE and in the Transport Area the Policy Enforcing Functional Entity PE-FE. Network operators do assign a specific codec to be used in the interconnecting network (between networks of different network operators) based on bilateral agreement or specify a specific codec to be used in their core network independent of the codec used in the access network, based on criteria such as bandwidth; see EP 1 758 333 A1 and WO 2007/022818 A1 [1] or to connect IP end devices using different codecs. The network element connecting the different networks is hereafter called border gateway BGW.

A number of different (bit rate) codecs are defined for the transport of voice over IP. However it is not economical feasible to provide all these codecs in IP based devices. That is why network operators provide in their networks network elements with the "transcoding" capability. This makes it possible to "connect" IP end devices with different codecs.

The above mentioned method suffers from the drawback that unnecessary transcoding may be present. Transcoding introduces additional delay and reduces the audio quality caused by converting one coding scheme into another coding scheme.

On the other hand an end to end based codec negotiation has been defined (ITU-T, IETF) to agree, if possible, to a codec available in both end devices, considering that transcoding reduces the voice quality by adding delay and decreasing the audio quality.

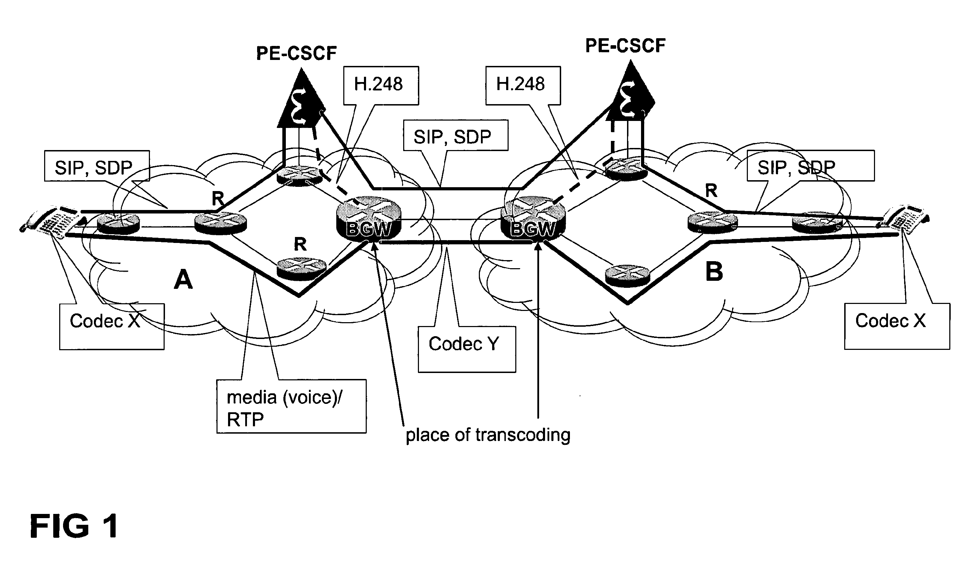

Nevertheless this negotiation does not avoid transcoding per se, because the Border Gateways, where the transcoding takes place are not involved in the codec negotiation, see Fig. 1 BGW.

It is therefore a task of the present invention, to provide a method and a system for avoiding unwanted transcoding causing a reduced voice service quality.

WO 2004/006597 A1 / EP 1 586 209 B1 [2] discloses the «Avoidance of transcoding or interruption on live load coding exchange in extant connections». This disclosure does not solve the above mentioned problem, since it is restricted to a media gateway MG between a TDM- and a packet-based network and is related to a media change during an extant connection, e.g. voice to fax and vice versa. An example would be where person A assures by voice communication with a person B, that the person B will be able to receive a confidential fax and only then sends the fax. This can be done by using a normal telephone apparatus combined with a Fax-Device Gr.3.

The object to provide a method and a system for avoiding unwanted transcoding causing a reduced voice service quality is solved by the method steps specified in claim 1 and by a system given with the features in claim 6.

By the introduction of
i) an information element containing at least a field «call/connection identifier» Call-Id and a field «common codec» of type «true/false» (Y/N) in the information exchange between a Physical Entity Call/Session Controller PE-CSCF and a Physical Entity containing the Policy Decision Functional Entity PD-FE and by a table in the Policy Decision Functional Entity PD-FE, where the table elements store the information «common codec» on a per call basis and a procedure for the Policy Decision Functional Entity PD-FE whereby
ii) in the involved border gateway BGW in case of «common codec» = true the transcoding is avoided or in case of «common codec» = false an predefined transcoding is performed according to the rule based on origin and destination , and contained in the the Policy Decision Functional Entity;
an unwanted transcoding between the two peers A and B can be avoided. This information element («common codec») does not affect other protocols and can easily be implemented in existing systems.

Further advantageous embodiments of the present invention are given in dependent claims.

The invention will be now described in preferred embodiments with reference to the accompanying figures wherein:
- Figure 1: Transcoding in the Border Gateways of network A and network B according to the state of the art;
- Figure 2: Transcoding avoidance in the Border Gateways of network A and network B according to a preferred embodiment of the invention;
- Figure 3: Protocol elements and table for «common codec»;
- Figure 4: Media (voice)/RTP - Codec Analysis in the Policy Decision Functional Entity;
- Figure 5: BGW containing Policy Enforcing Functional Entity and Policy Decision Functional Entity;
- Figure 6: BGW containing Policy Enforcing Functional Entity and an interface to Policy Decision Functional Entity.

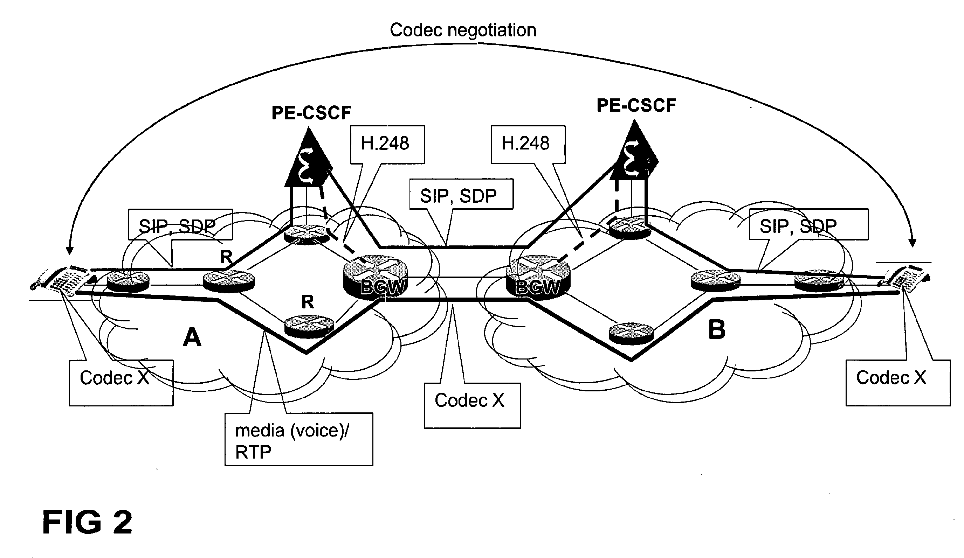

Fig. 2 shows the end-to-end negotiation between two subscribers A and B, where an A-subscriber initiates a call to a B-subscriber and the call is identified by a call/connection identifier «Call-Id».

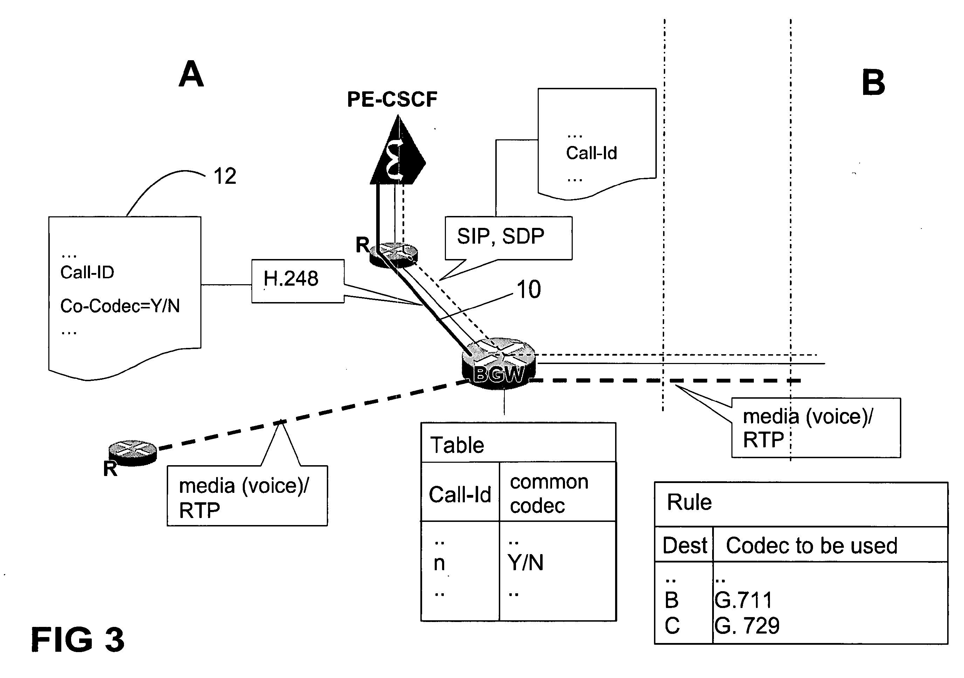

Each IP end device of the subscribers A, B is connected to an access router R of an access network, where the media stream is routed to a border gateway BGW, The signalling SIP, SDP is routed via an access router R to the Physical Entity «Call/Session Control Function» PE-CSCF, the latter is called for the sake of simplicity just «Call/Session Controller» PE-CSCF. The protocol used between the Call/Session Controller PE-CSCF and the Physical Entity containing a Policy Decision Functional Entity PD-FE, which may or may not be an integrated part of the Border Gateway BGW is enhanced by a new information element 12. Further details see Fig. 3. The information element 12 contains a field «common codec» of type«true/false» or «X/N» or «yes/no», this field is accompanied by another field «Call-Id» identifying the call by a call/connection identifier, see e.g. SIP.

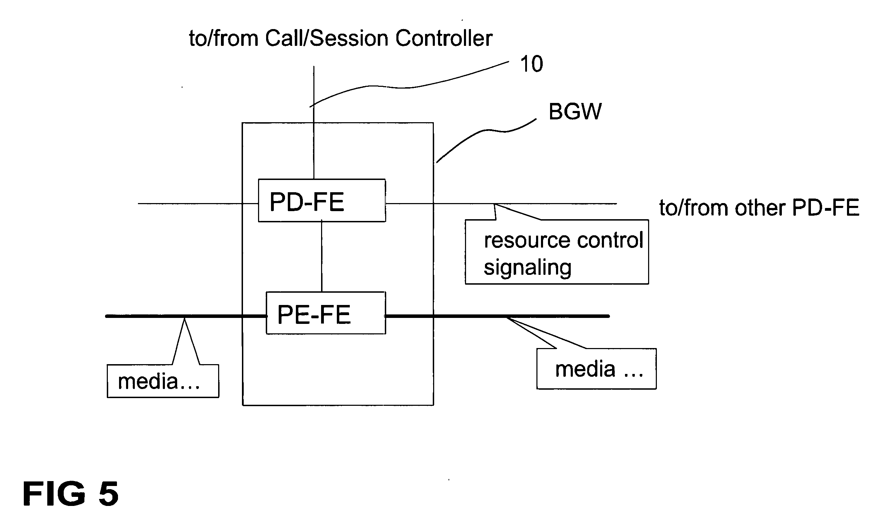

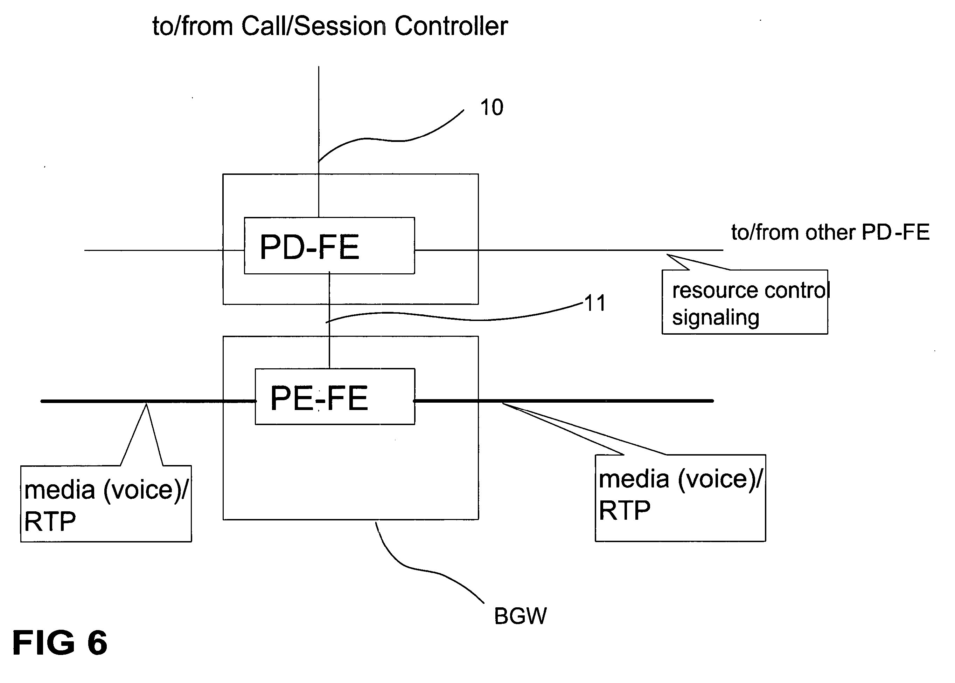

With reference to Fig. 3 the logic of the Policy Decision Functional Entity PD-FE is enhanced by a table containing the information «common codec» for each active call identified by the «Call-Id». The «Call-Id» is used to generate the appropriate address to access (read/write) the said table. Furthermore a procedure is provided to analyze for each RTP stream, if transcoding is to be applied or not by determining the media type and in case of voice accessing the corresponding element of the said table to get the «common codec» information and set the appropriate flag for the further processing in the Policy Decision Functional Entity PD-FE. If the Policy Decision Functional Entity PD-FE is not integrated in the Border Gateway BGW, then the protocol 11 used between the Policy Decision Functional Entity PD-FE contained in a separate Physical Entity and the Policy Enforcing Functional Entity PE-FE in the Border Gateway BGW is preferably according to an open standard, see Fig. 5 and 6. An example for such a protocol is H.248 accompanied by SDP or COPS.

The Policy Decision Functional Entity PD-FE maintains a table to store the new information element «common codec» on a per call basis. If the information «common codec» is true («Y», «yes»), then the Policy Decision Function Entity PD-FE ignores the existing rule stored in the Policy Decision Functional Entity PD-FE for applying the assigned codec (for crossing network borders) for this voice call and instructs the Policy Enforcing Functional Entity PE-FE accordingly. That means for the media «voice» no codec information will be sent to the Policy Enforcing Functional Entity when requesting the creation of the appropriate context.

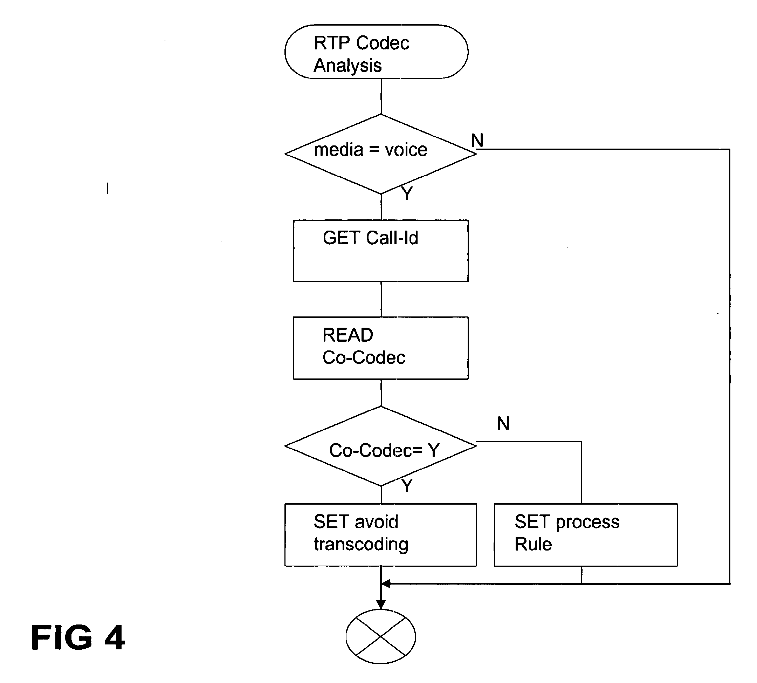

Fig. 4 shows the new procedure introduced in the Policy Decision Functional Entity PD-FE:
For each RTP stream the media type is determined and in case of voice, the corresponding element in said table is accessed to get the «common codec» information and the flags for the further processing are set, i.e. preparing the instruction to be sent to the Policy Enforcing Functional Entity PE-FE.

The Border Gateways BGW includes either only the Policy Enforcing Functional Entity PE-FE and thus provides the voice related signal processing resources or in addition to the Policy Enforcing Functional Entity PE-FE also the Policy Decision Functional Entity PD-FE.

Session Border Controllers of pre-NGN networks handling media and signalling can be considered as a physical implementation of a NGN Border Gateway containing the Policy Decision Functional Entity PD-FE and the Policy Enforcing Functional Entity PE-FE combined with a Signalling Gateway.

The Policy Enforcing Functional Entity PE-FE of the Border Gateway BGW providing the signal processing functions for voice, e.g. one or more codecs, is informed either by the integrated or external Policy Decision Functional Entity PD-FE based on the information received from the Call/Session Controller PE-CSCF, where the call set up handling takes place, if a common codec has been negotiated or not.

In another embodiment of this invention the codec could be negotiated between the Policy Decision Functional Entities PD-FE involved in the call.

### List of reference numerals

- 10: Resource control protocol, Rs interface; ITU-T Rec. Q.3301.1
- 11: protocols H.248, SDP, COPS
- 12: Common codec Information Element

### List of used symbols

- BGW: Border Gateway
- Call-Id: Call (Connection) Identifier
- Co-Codec: Common Codec
- COPS: Common Open Policy Service, Protocol; IETF RFC 2748
- CSCF: Call/Session Control Function
- ETSI: European Technical Standardization Institute
- IETF: Internet Engineering Task Force
- ITU-T: International Telecommunication Union
- PD-FE: Policy Decision Functional Entity
- PE-FE: Policy Enforcing Functional Entity
- PE-CSCF: Physical Entity «Call/Session Control Function
- R: Router
- RFC: Request For Comment
- RTP: Real Time Transport Protocol, IETF RFC 1889
- SBC: Session Border Controller
- SDP: Session Description Protocol, IETF RFC 2327
- SIP: Session Initiation Protocol, IETF RFC 2543
- H.248: MEGACO (Media Gateway Control Protocol), ITU-T/IETF

### References

[1] WO 2007/022818 A1
   «Method for the manipulation of speech packets in an IP-Gatway» Siemens Schweiz AG; CH - 8047 Zürich.
[2] WO 2004/006597 A1 / EP 1 586 209 B1
   «Avoidance of transcoding or interruption on live load coding exchange in extant connections» Siemens Aktiengesellschaft, DE - 80333 Munich

## Claims

1. Method for avoiding transcoding in a Border Gateway (BGW) of an IP network evaluating the result of a Codec negotiation between two IP end devices (A, B), where
- to the IP end devices an A- and a B-subscriber are associated;
- each IP end device of the subscribers (A, B) is connected to an access router (R) of an access network,
- the A-subscriber initiates a call to the B-subscriber and the call is identified by a call/connection identifier (Call-Id),
the method comprising the steps:
i) an information element (12) containing at least a field «call/connection identifier» (Call-Id) and a field «common codec» is introduced in the information exchange between a Physical Entity Call/Session Controller (PE-CSCF) and a Policy Decision Functional Entity (PD-FE);
ii) the Policy Decision Functional Entity (PD-FE) maintains a table, where each element of the table stores the information «common codec» as received by the Call/Session Controller;
iii) in the involved Policy Decision Functional Entity (PD-FE) a procedure is introduced, wherein in case of «common codec» = true a flag with the meaning «transcoding avoidance» is set or in case of «common codec» = false a flag with the meaning «process rule» is set;
iv) the Policy Decision Functional Entity informs (PD-FE) the Policy Enforcing Functional Entity (PE-FE) to
- create a context for an RTP-stream with transcoding according the indicated codec from the «process rule» or to
- create a context for an RTP-stream without transcoding.

2. Method according to claim 1;
**characterised in that**
in step iii) the involved Policy Decision Functional Entity (PD-FE) is integrated in the border Gateway (BGW).

3. Method according to claim 1;
**characterised in that**
in step iii) the involved Policy Decision Functional Entity (PD-FE) is external to the border Gateway (BGW).

4. Method according to one of the claims 1 to 3;
**characterised in that**
the Codec negotiation is performed by the Policy Decision Functional Entities (PD-FE) in the involved networks.

5. Method according to one of the claims 1 to 4;
**characterised in that**
in step i) the information exchange between a Physical Entity Call/Session Controller (PE-CSCF) and a Policy Decision Functional Entity (PD-FE) is based on the protocols H.248 accompanied by SDP.

6. System for avoiding transcoding in a Border Gateway (BGW) of an IP network evaluating the result of a Codec negotiation between two IP end devices (A, B), where
- to the IP end devices an A- and a B-subscriber are associated;
- each IP end device of the subscribers (A, B) is connected to an access router (R) of an access network,
- the A-subscriber initiates a call to the B-subscriber and the call is identified by a call/connection identifier (Call-Id),
**characerised in that**
i) an information element (12) containing at least a field «call/connection identifier» (Call-Id) and a field «common codec» is contained in the information exchange between a Physical Entity Call/Session Controller (PE-CSCF) and a Policy Decision Functional Entity (PD-FE);
ii) the Policy Decision Functional Entity (PD-FE) maintains a table, where each element of the table stores the information «common codec» as received by the Call/Session Controller;
iii) in the involved Policy Decision Functional Entity (PD-FE) a procedure is introduced, wherein in case of «common codec» = true a flag "transcoding avoidance" is set or in case of «common codec» = false a flag "process rule" is set;
iv) the Policy Decision Functional Entity informs (PD-FE) the Policy Enforcing Functional Entity (PE-FE) to
- create a context for an RTP-stream with transcoding according the indicated codec from the rule or to
- create a context for an RTP-stream without transcoding.
Border Gateway including Policy Decision Functional Entity and Policy Enforcing Functional Entity.

7. System according to claim 6;
**characterised in that**
in step iii) the involved Policy Decision Functional Entity (PD-FE) is integrated in the border Gateway (BGW).

8. System according to claim 6;
**characterised in that**
in step iii) the involved Policy Decision Functional Entity (PD-FE) is external to the border Gateway (BGW).

9. System according to one of the claims 6 to 8;
**characterised in that**
the Codec negotiation is performed by the Policy Decision Functional Entities (PD-FE) in the involved networks.

10. System according to one of the claims 6 to 9;
**characterised in that**
in step i) the information exchange between a Physical Entity Call/Session Controller (PE-CSCF) and a Policy Decision Functional Entity (PD-FE) is based on the protocols H.248 accompanied by SDP.
